# EUROPEAN PATENT APPLICATION

(11) **EP 3 907 836 A1**
(43) Date of publication of application: **10.11.2021**
(21) Application number: 21172536.1
(22) Date of filing: 06.05.2021
(51) Int. Cl.: H01S 3/10, H01S 3/08, H01S 3/081, H01S 3/094, H01S 3/0941, H01S 3/16

(54) **MODE-LOCKED LASER COMPRISING A DICHROIC PUMP MIRROR ADAPTED TO REFLECT THE LASER WAVELENGTHS OF A POLARIZED LIGHT AND TRANSMIT THE PUMP WAVELENGTH HAVING A DIFFERENT POLARIZATION**

(30) Priority: 08.05.2020 CH 5512020
(71) Applicant: Université de Neuchâtel, 2000 Neuchâtel (CH)
(72) Inventor: Labaye, François, 2000 Neuchâtel (CH); Wittwer, Valentin, 4913 Bannwil (CH); Südmeyer, Thomas, 8006 Zürich (CH)
(74) Representative: P&TS SA (AG, Ltd.)

(57) **Abstract**

A mode-locked laser used for producing a laser beam (L) wherein the laser wavelengths (λr) overlaps the pump wavelength (λw) or is as close as about 20% of the pump wavelength (λw) or below. The mode-locked laser comprises a dichroic input pump mirror (DM1) which is coated with a dielectric coating (K) designed to transmit the P-polarized light at the pump wavelength (λw) and reflect the S-polarised light (r2) at the laser optical bandwidth (λr) wherein the group delay dispersion (GDD) of the reflected S-polarised light (r2) deviates below 100 fs² for the laser wavelengths (λr).

## Description

### Technical domain

The present invention concerns an ultrafast laser arrangement based on gain medium. The gain medium may be of solid state type or based on optical fibres. In particular, it concerns a mode-locked laser wherein the S-polarised light can be reflected in a range of wavelengths overlapping with, or close to, the pump wavelengths with a very flat group dispersion delay (GDD). The GDD may in addition be kept very low.

### Related art

Ultrafast lasers such as femtosecond mode-locked lasers have continuously improved in terms of performance and find various applications in the fields of industry, medicine and research. Lasers based on Ti:sapphire doped gain material, while being very performant, remain expensive. Lasers based on ytterbium doped gain material showed very good performances but they cannot provide high average power with ultra-short pulses.. The ultrafast lasers comprise a dichroic mirror which is highly transmissive for the pump wavelengths and highly reflective for the laser wavelengths. It is usual that generating ultrashort pulses, typically in the order of 40 fs or below, with high power, suffers from limitations since the corresponding optical spectrum tends to overlap with the pump wavelengths, where the dichroic mirror is highly transmissive. In particular, the group delay dispersion (GDD) appears hardly controllable close to the pump wavelength.

Sévillano et al., 32-fs Kerr-lens mode-locked Yb:CaGdAlO4 oscillator optically pumped by a bright fiber laser; Optics Letters, October 15, 2014, Vol.39, N°20, provides an example of a Kerr-lens mode-locked Ytterbium-bulk oscillator. This document highlights the facts that improving the average power while maintaining the pulse duration as short as possible is a challenging goal. In particular, the GDD is negatively impacted by the dichroic mirrors. This leads to a reduction of the spectral bandwidth. In this publication, intra-cavity chirped mirrors are used to allow a pulse duration as short as 32 fs.

Kisel et al., High-power, efficient, semiconductor saturable absorber mode-locked Yb:KGW bulk laser; Optics Letters, June 15, 2015, Vol. 40, N°12, provides an alternative pumping scheme to avoid the restrictions on the cavity's gain bandwidth introduced by a dichroic input mirror. The pump mirror is here provided with a central hole through which the mode-locked laser light is transmitted and coated with a high reflection coating for the pump wavelength.

Another example of a laser based on ytterbium doped gain material is described in US20070268951.

An accurate control of the GDD appears necessary, in particular when decreasing the pulse duration in a mode-locked laser. This is particularly true when the pump wavelength overlaps the laser wavelength or is as close as 20% of the laser wavelength or closer.

### Short disclosure of the invention

An aim of the present invention is the provision of an ultrafast laser that overcomes the shortcomings and limitations of the state of the art. In particular, the aim of the present invention is to provide a mode-locked laser, in which the pump wavelengths overlap with the lasing wavelengths, or wherein the pump wavelengths are as close as 20% or closer of the lasing wavelengths, and wherein the GDD is flat over the lasing wavelengths. In particular, the deviation of GDD is below 100 fs² and more particularly below 10 fs² over the laser wavelength range.

According to the invention, these aims are attained by the object of the attached claims, and in particular by the provision of a specific dichroic mirror used as an input pump mirror.

It is a further object of the invention to provide a dichroic mirror usable in ultrafast laser, and adapted to transmit the pump wavelengths and reflect the lasing wavelengths, wherein the lasing wavelengths overlap with the pump wavelengths, or are as close as 20% of the pump wavelengths resulting to a laser beam having a flat GDD.

With respect to what is known in the art, the present invention allows to increase the performances of the ultrafast lasers.

### Short description of the drawings

Exemplar embodiments of the invention are disclosed in the description and illustrated by the following drawings:
- Figure 1: Schematic example of an arrangement of the dichroic mirror with regard to the pump source and the gain material,
- Figure 2: Schematic example of a ultrafast laser comprising a input pump mirror according to the present invention,
- Figure 3 : Schematic example of a pump source and an input dichroic mirror together with a polarizer,
- Figure 4 : Schematic example of a pump source and an input dichroic mirror together without polarizer,
- Figure 5 : Schematic example of a laser arrangement according to an embodiment of the present invention,
- Figure 6 : Schematic example of a laser arrangement according to another embodiment of the present invention,
- Figure 7 : Schematic example of a laser arrangement according to another embodiment of the present invention,
- Figure 8 : Schematic example of a laser arrangement according to another embodiment of the present invention,
- Figures 9a, 9b : Schematic diagram showing the reflection of the pump wavelength and the laser wavelength and the GDD in reflection for the laser wavelength and polarization when the input pump mirror with K2 has an incidence of 45°,
- Figures 10a, 10b : Schematic diagram showing the reflection and transmission of the pump wavelength and the laser wavelength and the GDD in reflection for the laser wavelength and polarization when the input pump mirror with K1 has an incidence of 60°,

### Examples of embodiments of the present invention

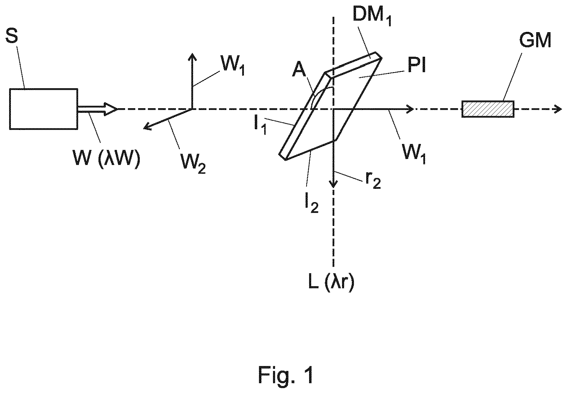

Figure 1 shows a schematic view of the mode-locked laser 1 according to the present invention. The optical pumping source S may be any known optical source. It includes in particular optical fibres, fiber lasers, a diode, a diode bare or a diode array. The optical pumping source S emits a pump beam W at a given pump wavelength λw. The wavelength λw of the pump beam W may be comprised between around 950 nm and around 1000 nm. It may be for example at around 980 nm or 976 nm. Alternatively, the wavelength λw of the pump beam W may be around 2000 nm. It is understood that depending on the used material, the wavelength λw of the pump beam W may vary in a large extend, for example in a range from 900 nm to 2500 nm or higher, without departing from the present invention. The pump beam W is directed to a gain material GM, also known as gain medium, through an input dichroic mirror DM1. The gain material GM emits a light in response to the pump beam W having a bandwidth either equal or different from the pump wavelength λw. The emission bandwidth of the gain material GM may be for example around 1030 nm or 1050 nm, as often observed. This however does not limit the present invention to those specific values since any kind of gain material GM may be used.

The mode-locked laser 1 according to the present invention also comprises an optical cavity, which can be of any type known to one skilled in the art. The optical cavity may be for example a standing wave cavity or a ring cavity.

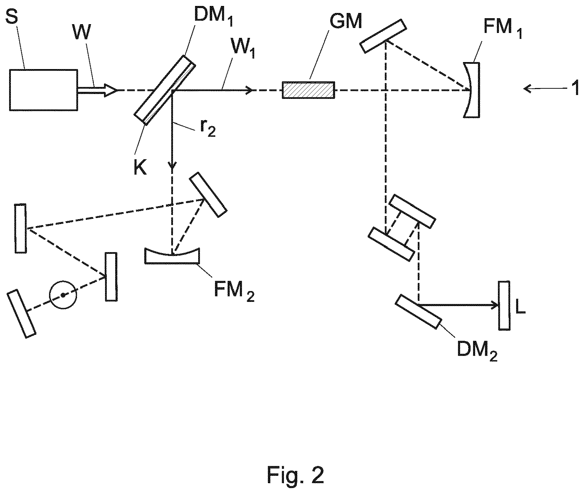

The first surface I1 of the input pump mirror DM1 faces the pumping source S. The second surface I2 of the input pump mirror DM1, opposite the first surface I1, is covered by a coating K, as better shown in figure 2, which is highly transmissive along the pump wavelength λw and highly reflective along the laser wavelength λr. The laser optical bandwidth λr may be comprised between around 950 nm and around 1200 nm. The laser optical bandwidth λr is for example around 1050 or 1055 nm. The laser optical bandwidth λr is thus very close to the pump wavelength λw. The laser optical bandwidth λr and the pump wavelength λw may even overlap each other.

Above and below, the pump mirror denotes an element which is reflective for the laser wavelengths at a specific polarisation and transmissive for the pump wavelength at another specific polarization. A pump mirror may include a suitable dichroic mirror.

The coating K allows to allows to reflect or substantially reflect the light emitted by the gain material GM which has the polarization rotated by 90 degrees with respect to the polarization of the transmitted light of the pump beam W, either being P-polarized or S-polarized, over the laser optical bandwidth λr. In other words, when the P-polarized light W1 of the pump beam W is transmitted by the coating K, then only or substantially only the S-polarized light r2 of the light emitted by the gain material GM is reflected. Alternatively, when the S-polarized light W2 pump beam W is transmitted by the coating K, then only or substantially only the P-polarized light r1 of light emitted by the gain material GM is reflected. This property of the input pump mirror DM1 as such coated with the coating K applies when the pump wavelength λw and the laser optical bandwidth λr are as close as 20 % from each other, or even closer such as 10%, . It also applies even when the pump wavelength λw and the laser optical bandwidth λr overlap. For example, for a pump wavelength λw of 980 nm and a laser optical bandwidth λr of 1050 nm, the pump wavelength λw corresponds to 93% of the laser optical bandwidth λr and thus differs by less than 20% of its value. In this situation also, the coating K allows to transmit only or substantially only one of the P-polarized light W1 and the S-polarized light W2 of the pump beam W and reflect only or substantially only the light emitted by the gain material GM which is differently polarized.

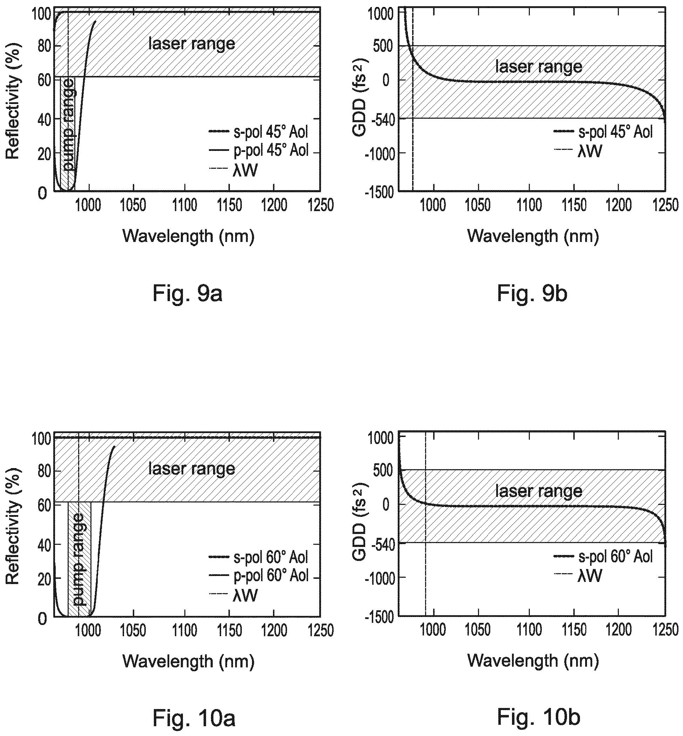

In a preferred embodiment, the input pump mirror DM1 together with its coating K allows to transmit the P-polarised light W1 of the pump beam W at a pump wavelength λw comprised between 950 nm and 1000 nm and reflect the S-polarized light r2 of the light emitted by the gain material GM at a laser optical bandwidth λr comprised between 950 and 1250 nm or even broader, as shown in the diagrams of figures 9a, 9b, 10a, 10b. The laser optical bandwidth λr may be comprised between around 900 and around 2500 nm depending on the used material.

The input pump mirror DM1, together with its coating K, furthermore allows a flat GDD over the ranges of wavelengths above-mentioned. The term "flat" is here understood as a variation of the GDD lower than 10% of its nominal value. In other words, if the nominal value of the GDD of the coating for the laser bandwidth is -10fs², the variations of the GDD is limited at +-1fs². For a nominal value of -100 fs², its variation is lower than +-10fs². The nominal value of the GDD may vary according to the material used. The most important parameter is that its remains flat, as above described. In an embodiment, the nominal value of the GDD may be maintained below -150 fs², preferably below 100 fs² while remaining flat For example, the GDD nominal value of the light reflected by the input pump mirror DM1 may remain below 100 fs², preferably below 10 fs², while it remains flat over the range of around 950 nm to around 1250 nm or over the range of around 980 nm to around 1230 nm, or aver another suitable range.

The coating K comprises a stack of at least two transparent dielectric material D1, D2 arranged in several alternate layers. The refractive index n1 of a given dielectric material D1 differs from the refractive index n2 of another dielectric material D2 of the coating by at least 10%, preferably more than 20%, more preferably more than 40%. Although two dielectric materials are mentioned here, more than two different dielectric materials may be used for the coating K. A given dielectric material D1 may be selected so as its refractive index n1 is below 1.8 or below 1.6 or below 1.5. The refractive index n1 of a first dielectric material D1 may be for example around 1,47 or around 1,45 or even lower over the range of wavelengths above mentioned. A second dielectric material D2 of the coating may be selected so as its refractive index n2 is higher than 1.9 or higher than 2 or higher than 2.1. The refractive index n2 of a second dielectric material D2 may be for example around 2.07 or higher over the range of the above mentioned wavelengths. In particular, a first dielectric material D1 may be selected among SiO₂ or Al₂O₅. A second dielectric material D2 may be selected among Ta₂O₅ or Nb₂O₅ or HfO₂ or TiO₂. The dielectric material D1, D2 of the coating K may however be different providing that their respective refractive indices as well as the relative difference between their refractive indices corresponds to the values above mentioned.

In the present description, the value of the refractive indices n1, n2, should be understood as the refractive index values within the considered laser wavelength.

Each one of the dielectric materials D1, D2 forms a layer C1 to Cm, wherein m designates the number of layers C. The first layer C1 corresponds to the layer which is the closest to the substrate forming the input dichroic mirror DM1. The last layer Cm corresponds to the top layer of the stack. The dielectric materials D1, D2 differs from one layer Cm to the two contiguous layers Cm-1 and Cm+1. In case two dielectric materials D1, D2 are used, the coating defines an alternate of each of these two dielectric materials D1, D2. The number m of the layers C may be comprised between 10 to more than 80, preferably between 20 and 50. A range of 30 to 45 layers represent an efficient coating K for the purpose of the present invention.

Each of the layer Cm of the coating has a thickness Tm comprised between around 10 nm and 1000 nm, preferably between 100 nm and 400 nm. The thickness Tm of a given layer Cm may depend on the refractive index n of the dielectric material D of the corresponding layer Cm. In a preferred embodiment, a layer Cm of a first dielectric material D1 having a low refractive index n1, that is to say a refractive index n1 lower than 1.8 or 1.6 or 1.5, may be thicker than a layer Cm+1 of a second dielectric material D2 having a high refractive index n2, that is to say higher than 1.9 or higher than 2 or higher than 2.1. For example, the average thickness Tm of the layers of a first dielectric material D1, having a low refractive index n1, may be higher than the average thickness Tm of the layers of a second dielectric material D2, having a high refractive index n2 by around 20% to around 60%. In particular, the average thickness of the layers of the first dielectric material D1 may be comprised between 200 nm and 300 nm, or between 200 nm and 250 nm. The average thickness of the layers of the second dielectric material D2 may be comprised between 80 nm and 190 nm, or between 100 nm and 180 nm. The global thickness of the coating K may be comprised between around 4 µm to around 10 µm, preferably between around 5 µm to around 9 µm, depending on the number of the layers C and their thickness.

It should be understood that all the layers C of a given dielectric material do not have the same thickness and that the thickness of each of the layers is determined according to its interference effects.

The successive layers C, including their refractive indices, their thicknesses, and their number is therefore specifically tuned to modulate the reflectivity, the transmission, and the phase properties defining the GDD of the coating K according to the spectral range.

Examples of coating K are given by the following specific layers stacks K1 and K2. These are of course illustrative examples which do not aim at limiting the scope of the present invention. Other combinations may be defined depending on the nature of the dielectric materials used, the considered bandwidths, and some other parameters.

| K1 | | | | K2 | | |
|---|---|---|---|---|---|---|
| Layer number m | Layer thickness Tm (nm) | Dielectric material D1/D2 | | Layer number m | Layer thickness Tm (nm) | Dielectric material D1/D2 |
| 0 | 0.00 | substrate | | 0 | 0.00 | substrate |
| 1 | 137.94 | Ta₂O₅ | | 1 | 126.38 | Ta₂O₅ |
| 2 | 238.01 | SiO₂ | | 2 | 203.17 | SiO₂ |
| 3 | 148.42 | Ta₂O₅ | | 3 | 136.05 | Ta₂O₅ |
| 4 | 241.32 | SiO₂ | | 4 | 217.08 | SiO₂ |
| 5 | 147.65 | Ta₂O₅ | | 5 | 143.13 | Ta₂O₅ |
| 6 | 236.58 | SiO₂ | | 6 | 222.93 | SiO₂ |
| 7 | 144.29 | Ta₂O₅ | | 7 | 143.23 | Ta₂O₅ |
| 8 | 230.52 | SiO₂ | | 8 | 218.87 | SiO₂ |
| 9 | 140.73 | Ta₂O₅ | | 9 | 138.88 | Ta₂O₅ |
| 10 | 225.03 | SiO₂ | | 10 | 211.22 | SiO₂ |
| 11 | 137.76 | Ta₂O₅ | | 11 | 133.95 | Ta₂O₅ |
| 12 | 221.21 | SiO₂ | | 12 | 204.50 | SiO₂ |
| 13 | 136.17 | Ta₂O₅ | | 13 | 130.53 | Ta₂O₅ |
| 14 | 219.78 | SiO₂ | | 14 | 200.92 | SiO₂ |
| 15 | 136.23 | Ta₂O₅ | | 15 | 129.43 | Ta₂O₅ |
| 16 | 221.48 | SiO₂ | | 16 | 201.17 | SiO₂ |
| 17 | 137.80 | Ta₂O₅ | | 17 | 130.77 | Ta₂O₅ |
| 18 | 225.20 | SiO₂ | | 18 | 204.95 | SiO₂ |
| 19 | 140.21 | Ta₂O₅ | | 19 | 134.08 | Ta₂O₅ |
| 20 | 228.71 | SiO₂ | | 20 | 211.02 | SiO₂ |
| 21 | 142.05 | Ta₂O₅ | | 21 | 138.23 | Ta₂O₅ |
| 22 | 230.30 | SiO₂ | | 22 | 217.38 | SiO₂ |
| 23 | 142.16 | Ta₂O₅ | | 23 | 141.81 | Ta₂O₅ |
| 24 | 228.87 | SiO₂ | | 24 | 221.48 | SiO₂ |
| 25 | 140.41 | Ta₂O₅ | | 25 | 143.00 | Ta₂O₅ |
| 26 | 225.14 | SiO₂ | | 26 | 219.84 | SiO₂ |
| 27 | 137.88 | Ta₂O₅ | | 27 | 139.30 | Ta₂O₅ |
| 28 | 221.22 | SiO₂ | | 28 | 209.45 | SiO₂ |
| 29 | 136.01 | Ta₂O₅ | | 29 | 130.77 | Ta₂O₅ |
| 30 | 219.68 | SiO₂ | | 30 | 327.26 | SiO₂ |
| 31 | 135.75 | Ta₂O₅ | | 31 | 0.00 | air |
| 32 | 221.13 | SiO₂ | | | | |
| 33 | 137.35 | Ta₂O₅ | | | | |
| 34 | 224.95 | SiO₂ | | | | |
| 35 | 140.13 | Ta₂O₅ | | | | |
| 36 | 229.98 | SiO₂ | | | | |
| 37 | 143.65 | Ta₂O₅ | | | | |
| 38 | 234.95 | SiO₂ | | | | |
| 39 | 146.61 | Ta₂O₅ | | | | |
| 40 | 238.17 | SiO₂ | | | | |
| 41 | 147.74 | Ta₂O₅ | | | | |
| 42 | 236.55 | SiO₂ | | | | |
| 43 | 143.35 | Ta₂O₅ | | | | |
| 44 | 225.03 | SiO₂ | | | | |
| 45 | 88.08 | Ta₂O₅ | | | | |
| 46 | 0.00 | air | | | | |

The input pump mirror DM1 may be oriented so as to have an incident angle A with regard to the pump beam W and the laser beam L higher than around 30°. The incident angle A may be for example comprised between 40° and 70°. The diagrams of figures 9a, 9b, 10a and 10b show the results regarding the reflection and de GDD of the laser wavelengths λr when the input pump mirror DM1 has an incident angle A of 45° and 60°. In particular, figures 9a and 9b show the results regarding the reflection and de GDD of the laser wavelengths λr when the input pump mirror DM1 has an incident angle A of 45° and the coating K is K1. Figures 10a and 10b show the results regarding the reflection and de GDD of the laser optical bandwidth λr when the input pump mirror DM1 has an incident angle A of 60° and the coating K is K2.

The input pump mirror DM1 as above described is used as a cavity mirror in an ultrafast laser oscillator to couple the P-polarized optical pump W1 in the laser cavity. It simultaneously allows the S-polarized intracavity beam r2 of the ultrafast oscillator to be reflected with a low and flat GDD over the laser optical bandwidth λr.

It is understood that while the above invention is described for a mode locked laser, it is applicable to any other adequate laser arrangement or sub-arrangement wherein the pump wavelength overlaps with laser optical bandwidth or is as close as 20%. This may be the case for regenerative amplifier and multipass amplifiers.

The gain medium GM of the present mode-locked laser may be selected from ytterbium based solid-state gain material. The gain material may alternatively be based another material such as Ho, Cr, Fe, Tm or a mixture thereof. The gain medium GM of the present mode-locked laser may be selected from on of the following : Yb:CALGO (CaGdAlO₄), Yb:CALYO (CaYAlO₄), Yb:CaF₂, Yb:YAG(Y₃Al₅O₁₂), Yb:LuAG(Lu₃Al₅O₁₂), Yb:KYW(K(WO₄)₂), Yb:KGW(KGd(WO₄)₂), Yb:Y₂O₃, Yb:Sc₂O₃, Yb:Lu₂O₃, Ho:YAG (Y₃Al₅O₁₂), Cr:ZnS, Cr:ZnSe, Fe:ZnS, Fe:ZnSE, Tm/Ho-codoped material, or a combination thereof. These are non-limitative examples. Other gain material may be considered without departing from the spirit of the present invention.

The input dichroic mirror DM1 may further comprise an antireflect coating Q on its first surface I1. Such an antireflect coating Q may comprise a number of stacked dielectric materials, either identical or different from the dielectric materials D1, D2 used for the coating K. A limited number of layers, such as 10 layers or less, comprising an alternate of a first dielectric material Q1 and a second dielectric material Q2, may be used as antireflect coating.

Examples of antireflect coating Q are Q1 and Q2. These are of course illustrative examples which do not aim at limiting the scope of the present invention. Other combinations may be defined depending on the nature of the dielectric materials used, the considered bandwidths, and any other relevant parameters.

| Q1 | | | | Q2 | | |
|---|---|---|---|---|---|---|
| Layer number m | Layer thickness Tm (nm) | Dielectric material D1/D2 | | Layer number m | Layer thickness Tm (nm) | Dielectric material D1/D2 |
| 0 | 0.00 | substrate | | 0 | 0.00 | substrate |
| 1 | 64.96 | SiO₂ | | 1 | 219.32 | Ta₂O₅ |
| 2 | 30.84 | Ta₂O₅ | | 2 | 322.63 | SiO₂ |
| 3 | 81.33 | SiO₂ | | 3 | 169.19 | Ta₂O₅ |
| 4 | 142.18 | Ta₂O₅ | | 4 | 259.06 | SiO₂ |
| 5 | 342.24 | SiO₂ | | 5 | 182.54 | Ta₂O₅ |
| 6 | 156.60 | Ta₂O₅ | | 6 | 293.31 | SiO₂ |
| 7 | 141.49 | SiO₂ | | 7 | 173.25 | Ta₂O₅ |
| 8 | 0.00 | air | | 8 | 112.92 | SiO₂ |
| | | | | 9 | 0.00 | air |

The input dichroic mirror DM1 according to the present invention is preferably free of any hole, and in particular free of a central hole.

The mode-locked laser 1 may in addition comprise a second dichroic mirror MD2 used as a pump output mirror, as better shown in figure 2. The second dichroic mirror DM2 may be coated with a coating K as defined above. Such a coating may be the same as the coating K1 or K2 or different. The second dichroic mirror MD2 may in addition comprise an antireflect coating Q, either identical or similar or different from the antireflect coating Q1 and Q2.

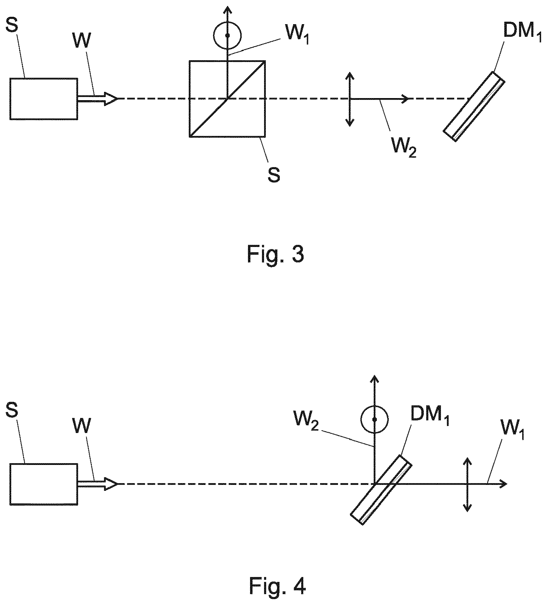

The laser arrangement comprising the input dichroic mirror DM1 may in addition comprise a polariser, as shown in figure 3, or be free of polarizer, as shown in figure 4. In this later case, the dichroic mirror DM1 itself differentiates the P-polarized and the S-polarized light.

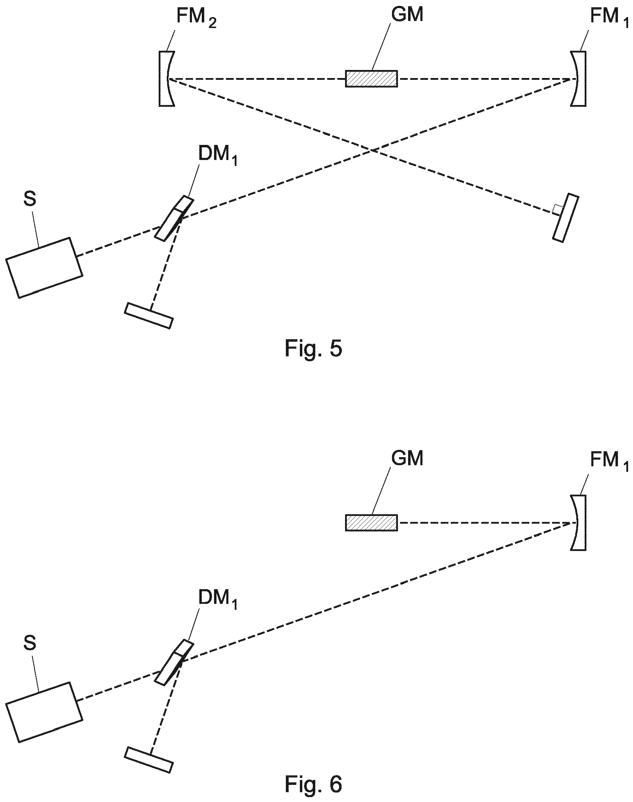

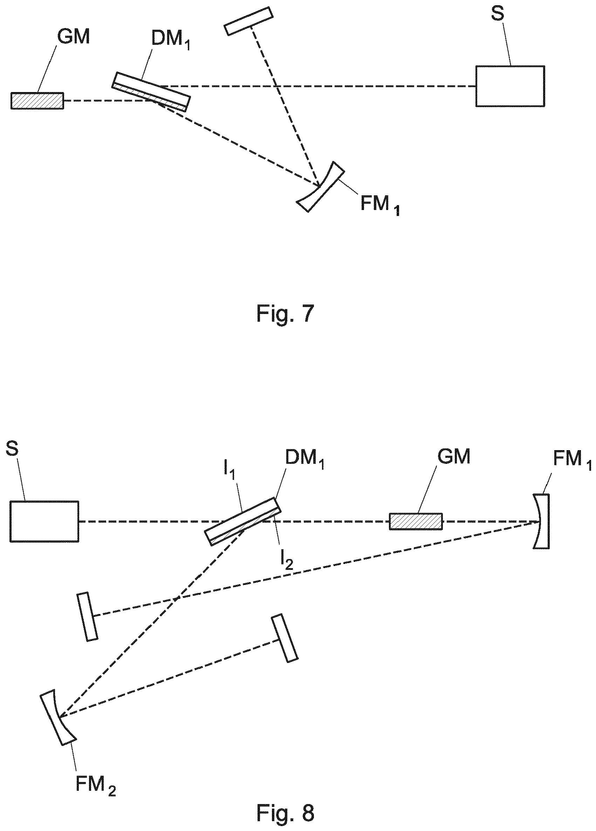

Figures 5, 6, 7 and 8 show non limitative examples of laser arrangements according to the present invention. In these figures the references FM1 denotes a first mirror, the reference FM2 denotes a second mirror. Each of the first and second mirrors comprise a concave surface having a predetermined curvature shape.

The expression "transmits substantially only the P-polarized light" should be understood as defining a complete transmission of the P-polarized light or a transmission of more than 90%, or more than 95% of the P-polarized light while the S-polarized light is not transmitted at all, or less than 10% or even less than 5% of the S-polarized light is transmitted. The same meaning applies the S-polarized light in the expression "transmits substantially only the S-polarized light".

The expression "reflects substantially only the P-polarized light" should be understood as defining a complete reflection of the P-polarized light or a reflection of more than 90%, or more than 95% of the P-polarized light while the S-polarized light is not reflected at all, or less than 10% or even less than 5% of the S-polarized light is reflected. The same meaning applies to the S-polarized light in the expression "reflects substantially only the S-polarized light".

## Claims

1. Mode-locked laser (1) used for producing a laser beam (L) at a laser optical bandwidth (λr), consisting of S-polarised light (r2), said mode-locked laser comprising :
- an optical pumping source (S), emitting a pump beam (W) at a pump wavelength (λw), said pump beam being P-polarised light (W1), wherein the laser optical bandwidth (λr) overlaps the pump wavelength (λw) or is as close as about 20% of the pump wavelength (λw) or below,
- a gain medium (GM),
- an optical cavity (OP), and
- an input pump mirror (DM1) having a first surface (I1) facing the optical pumping source (S) and a second surface (12) opposite the first surface (11) and defining a plan of incidence (PI) having an incident angle (A) with respect to the emitted beam (W),
wherein the second surface (12) comprises a dielectric coating (K) designed to transmit the P-polarized light at the pump wavelength (λw) and reflect the S-polarised light (r2) at the laser optical bandwidth (λr) wherein the group dispersion delay (GDD) of the reflected S-polarised light (r2) is deviated at less than 10% of its nominal value over the laser range.

2. Mode-locked laser according to claim 1, wherein the nominal value of said GDD is around -150fs² or lower.

3. Mode-locked laser according to claim 1, wherein said incidence angle (A) of the pump mirror (DM1) is higher than 30°.

4. Mode-locked laser according to any one of claims 1 to 4, wherein the dielectric coating (K) of the pump mirror (DM1) comprises a stack of at least two dielectric material (D1, D2) arranged in at least 30 alternate layers, wherein the refractive index (n1, n2) of each of the dielectric material (D1, D2) differs from the refractive index of the other dielectric material by at least 10%, preferably more than 20%, more preferably more than 40%.

5. Mode-locked laser according to any one of claims 1 to 4, wherein the dielectric coating (K) comprises at least 30 layers of a first dielectric material D1 having a refractive index (n1) below 1.8, preferably below 1.6, more preferably below 1.5 and a second dielectric material D2 having a refractive index (n2) higher than 1.9, preferably higher than 2, more preferably higher than 2.1.

6. Mode-locked laser according to claims 5 or 6, wherein the first dielectric material is SiO₂ or Al₂O₅ and the second dielectric material is Ta₂O₅ or Nb₂O₅ or HfO₂ or TiO₂.

7. Mode-locked laser according to claims 5 to 7, wherein the thickness of each layer is independently comprised between 10 and 500 nm, preferably between 50 and 300 nm.

8. Mode-locked laser according to claims 5 to 8, wherein the thickness T1 of the layers of the first dielectric material D1 is higher than the thickness T2 of the adjacent layer of the second dielectric material D2 by 20% to 60%.

9. Mode locked laser according to claims 5 to 9, wherein the dielectric coating (K) is selected among one of the coatings (K1) and (K2) :
| K1 | | | | K2 | | |
|---|---|---|---|---|---|---|
| Layer number m | Layer thickness Tm (nm) | Dielectric material D1/D2 | | Layer number m | Layer thickness Tm (nm) | Dielectric material D1/D2 |
| 0 | 0.00 | substrate | | 0 | 0.00 | substrate |
| 1 | 137.94 | Ta₂O₅ | | 1 | 126.38 | Ta₂O₅ |
| 2 | 238.01 | SiO₂ | | 2 | 203.17 | SiO₂ |
| 3 | 148.42 | Ta₂O₅ | | 3 | 136.05 | Ta₂O₅ |
| 4 | 241.32 | SiO₂ | | 4 | 217.08 | SiO₂ |
| 5 | 147.65 | Ta₂O₅ | | 5 | 143.13 | Ta₂O₅ |
| 6 | 236.58 | SiO₂ | | 6 | 222.93 | SiO₂ |
| 7 | 144.29 | Ta₂O₅ | | 7 | 143.23 | Ta₂O₅ |
| 8 | 230.52 | SiO₂ | | 8 | 218.87 | SiO₂ |
| 9 | 140.73 | Ta₂O₅ | | 9 | 138.88 | Ta₂O₅ |
| 10 | 225.03 | SiO₂ | | 10 | 211.22 | SiO₂ |
| 11 | 137.76 | Ta₂O₅ | | 11 | 133.95 | Ta₂O₅ |
| 12 | 221.21 | SiO₂ | | 12 | 204.50 | SiO₂ |
| 13 | 136.17 | Ta₂O₅ | | 13 | 130.53 | Ta₂O₅ |
| 14 | 219.78 | SiO₂ | | 14 | 200.92 | SiO₂ |
| 15 | 136.23 | Ta₂O₅ | | 15 | 129.43 | Ta₂O₅ |
| 16 | 221.48 | SiO₂ | | 16 | 201.17 | SiO₂ |
| 17 | 137.80 | Ta₂O₅ | | 17 | 130.77 | Ta₂O₅ |
| 18 | 225.20 | SiO₂ | | 18 | 204.95 | SiO₂ |
| 19 | 140.21 | Ta₂O₅ | | 19 | 134.08 | Ta₂O₅ |
| 20 | 228.71 | SiO₂ | | 20 | 211.02 | SiO₂ |
| 21 | 142.05 | Ta₂O₅ | | 21 | 138.23 | Ta₂O₅ |
| 22 | 230.30 | SiO₂ | | 22 | 217.38 | SiO₂ |
| 23 | 142.16 | Ta₂O₅ | | 23 | 141.81 | Ta₂O₅ |
| 24 | 228.87 | SiO₂ | | 24 | 221.48 | SiO₂ |
| 25 | 140.41 | Ta₂O₅ | | 25 | 143.00 | Ta₂O₅ |
| 26 | 225.14 | SiO₂ | | 26 | 219.84 | SiO₂ |
| 27 | 137.88 | Ta₂O₅ | | 27 | 139.30 | Ta₂O₅ |
| 28 | 221.22 | SiO₂ | | 28 | 209.45 | SiO₂ |
| 29 | 136.01 | Ta₂O₅ | | 29 | 130.77 | Ta₂O₅ |
| 30 | 219.68 | SiO₂ | | 30 | 327.26 | SiO₂ |
| 31 | 135.75 | Ta₂O₅ | | 31 | 0.00 | air |
| 32 | 221.13 | SiO₂ | | | | |
| 33 | 137.35 | Ta₂O₅ | | | | |
| 34 | 224.95 | SiO₂ | | | | |
| 35 | 140.13 | Ta₂O₅ | | | | |
| 36 | 229.98 | SiO₂ | | | | |
| 37 | 143.65 | Ta₂O₅ | | | | |
| 38 | 234.95 | SiO₂ | | | | |
| 39 | 146.61 | Ta₂O₅ | | | | |
| 40 | 238.17 | SiO₂ | | | | |
| 41 | 147.74 | Ta₂O₅ | | | | |
| 42 | 236.55 | SiO₂ | | | | |
| 43 | 143.35 | Ta₂O₅ | | | | |
| 44 | 225.03 | SiO₂ | | | | |
| 45 | 88.08 | Ta₂O₅ | | | | |
| 46 | 0.00 | air | | | | |

10. Mode-locked laser according to any one of preceding claims, wherein the gain medium (GM) is a solid-state laser based on ytterbium or elements such as Ho, Cr, Fe, Tm or a mixture thereof.

11. Mode-locked laser according to any one of the preceding claims, wherein the first surface (I1) of the pump mirror (DM1) is coated with an anti-reflect material or coating being a stack of at least 2 different dielectric materials.

12. Mode-locked laser according to any one of the preceding claims further comprising a second mirror (DM2) used as a pump output mirror.
